(19) Europäisches Patentamt
European Patent Office
Office européen des brevets

(11) **EP 1 283 648 A1**

(12) **EUROPÄISCHE PATENTANMELDUNG**

(43) Veröffentlichungstag:
**12.02.2003  Patentblatt 2003/07**

(51) Int Cl.⁷: **H04Q 7/38**

(21) Anmeldenummer: **01119060.0**

(22) Anmeldetag: **07.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **SIEMENS AKTIENGESELLSCHAFT 80333 München (DE)**

(72) Erfinder:
• **Beckmann, Mark 38102 Braunschweig (DE)**
• **Eckert, Michael 38122 Braunschweig (DE)**
• **Hans, Martin 31141 Hildesheim (DE)**
• **Otte, Andreas 29227 Celle (DE)**

(54) **Verfahren,Teilnehmergerät sowie Funkkommunikationssystem zur Übertragung von Gruppennachrichten**

(57)   Zur Benachrichtigung mindestens einer Gruppe (MC1) von einem oder mehreren Teilnehmergeräten eines Funkkommunikationssystems (FCS) über das Vorliegen mindestens einer Gruppennachricht (GN1) wird von mindestens einem Netzwerkelement (BS1) den Teilnehmergeräten der jeweiligen Gruppe (MC1) zusätzlich mindestens ein gemeinsames Gruppen-Paging-Indikatorsignal (GPI1) gesendet und angezeigt.

FIG 1

EP 1 283 648 A1

**Beschreibung**

Der Erfindung liegt als eine Aufgabe zugrunde, einen Weg aufzuzeigen, wie mindestens eine Gruppe von einem oder mehreren Teilnehmergeräten eines Funkkommunikationssystems über das Vorliegen mindestens einer Gruppennachricht möglichst effizient benachrichtigt werden kann. Diese Aufgabe wird durch folgendes erfindungsgemäße Verfahren gelöst:

Verfahren zur Benachrichtigung mindestens einer Gruppe von einem oder mehreren Teilnehmergeräten eines Funkkommunikationssystems über das Vorliegen mindestens einer Gruppennachricht, die an diese Gruppe von mindestens einem Netzwerkelement des Funkkommunikationssystems über mindestens einen Funkkanal versendet werden soll, wobei das Vorliegen dieser Gruppennachricht den Teilnehmergeräten der jeweiligen Gruppe mit Hilfe eines gemeinsamen, zusätzlichen Gruppen-Paging-Indikatorsignals angezeigt und zur Auswertung bereitgestellt wird.

Dadurch ist es in effektiver Weise möglich, den ein oder mehreren Teilnehmergeräten einer vordefinierbaren Gruppe gemeinsam mit Hilfe des zusätzlichen Gruppen-Paging-Indikatorsignals anzukündigen, daß für diese Gruppe mindestens eine Gruppennachricht von mindestens einem Netzwerkelement des Funkkommunikationssystems zur Übertragung über mindestens einen Funkkanal ansteht. Aufgrund des Gruppen-Paging-Indikatorsignals kann das jeweilige Teilnehmergerät eine Vorauswahl dahingehend treffen, ob es mindestens einen weiteren Funkkanal mit weiteren Informationen über die vorliegende, zu übertragende Gruppennachricht zusätzlich abhört. Falls das jeweilige Teilnehmergerät von der anstehenden Gruppennachricht nicht betroffen ist, ist es somit für dieses nicht erforderlich, tatsächlich eine Signalisierungsverbindung über mindestens einen Funkkanal zu mindestens einem Netzwerkelement des Funkkommunikationssystems aufzubauen. Dadurch ist ein funkressourcen- und energiesparender Betrieb des jeweiligen Teilnehmergeräts ermöglicht. Denn nur falls das jeweilige Teilnehmergerät zur jeweilig angesprochenen Gruppe gehört, hört es auf mindestens einen weiteren Funkkanal, um weitere Informationen über die anstehende, zu übertragende Gruppennachricht abzuhören.

Die Erfindung betrifft weiterhin ein Teilnehmergerät eines Funkkommunikationssystems, das derart ausgebildet ist, dass es nach dem erfindungsgemäßen Verfahren betreibbar ist.

Außerdem betrifft die Erfindung auch ein Funkkommunikationssystem zur Durchführung des erfindungsgemäßen Verfahrens.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:

Figur 1          in schematischer Darstellung Komponenten eines Funkkommunikationssystems zur erfindungsgemäßen Benachrichtigung mindestens einer Gruppe von einem oder mehreren Teilnehmergeräten,

Figur 2          in schematischer Darstellung ein Schichtenmodell der Protokolle auf der Luftschnittstelle zwischen einem Teilnehmergerät und der zuständigen Basisstation in der Funkzelle dieses Teilnehmergeräts bei dem Funkkommunikationssystem nach Figur 1, insbesondere nach dem UMTS-Standard,

Figur 3          in schematischer Darstellung die Struktur bzw. den Aufbau der Rahmenstruktur des separaten, physikalischen Funkkanals zur Übertragung eines Gruppen-Paging-Indikatorsignals für das erfindungsgemäße Benachrichtigungsverfahren im Funkkommunikationssystem nach Figur 1,

Figur 4          in schematischer Darstellung einen vorteilhaften Signalisierungsablauf zur Benachrichtigung einer Gruppe von Teilnehmergeräten des Funkkommunikationssystems nach Figur 1 ausgehend von mindestens einer Netzwerkkomponente, insbesondere Basisstation, über das netzwerkseitige Vorliegen mindestens einer zu übertragenden Gruppennachricht,

Figur 5          in schematischer Darstellung Informationselemente der Systeminformation, die zwischen mindestens einer Basisstation des Funkkommunikationssystems nach Figur 1 und mindestens einem Teilnehmergerät in dessen Funkzelle übertragen wird, wobei diese Systeminformation um ein zusätzliches Informationselement erweitert wird, mit dem markiert wird, ob auf dem sogenannten Secondary Common Control Physical Channel in UMTS ein Paging-Kanal mit Informationen über die Gruppennachricht gemultiplext wird,

Figur 6          in schematischer Darstellung das Informationselement "PICH-Info" als weiterer Teil der Systeminformation nach Figur 5, wobei durch ein zusätzliches Informationselement die Position eines etwaigen Gruppen-Paging-Indikatorsignals in der Rahmenstruktur dessen Funkkanals nach Figur 3 für jedes Teilnehmergerät in jeder von der anstehenden Gruppennachricht betroffenen Funkzelle des Funkkommunikationssystems zusätzlich übermittelt wird,

Figur 7, 8, 9    zusätzliche Informationselemente nach einer ersten Variante des erfindungsgemäßen Verfahrens über die Art und den Grund der vorliegenden, zu übertragenden Gruppennachricht, die auf einem separaten Funkkanal, insbesondere einem Paging Kanal, übertragen werden, und

Figur 10, 11    modifizierte Informationselemente des sogenannten Paging Kanals bzw. -Channels in UMTS, die weitere Angaben über die Art, den Grund und/oder die spezifische Gruppe enthalten, für die die anstehende Gruppennachricht bestimmt ist.

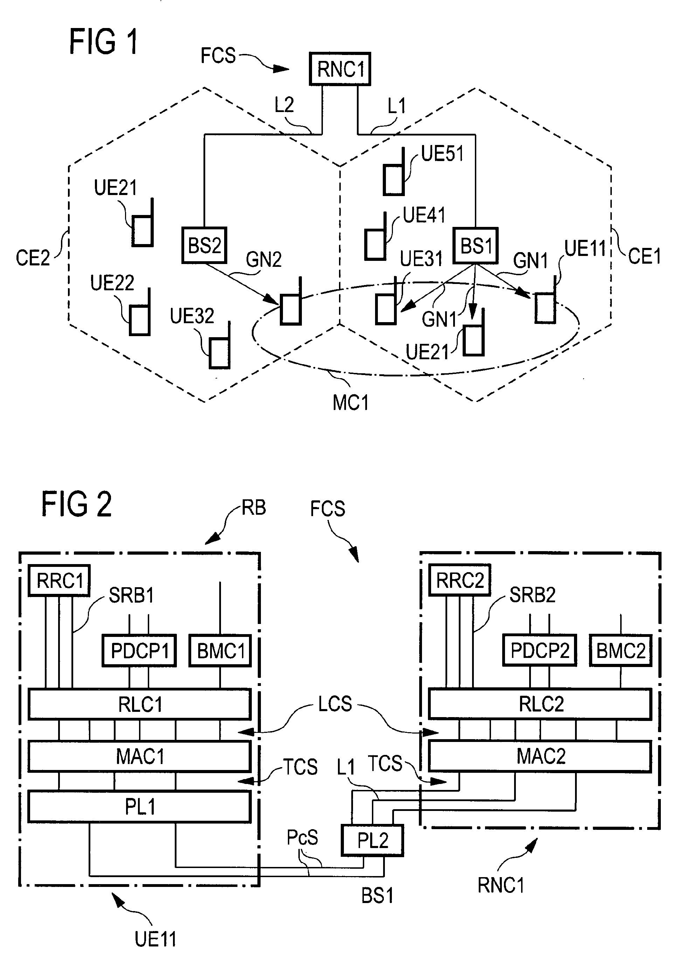

Elemente mit gleicher Funktion und Wirkungsweise sind in den Figuren 1 mit 11 jeweils mit denselben Bezugszeichen versehen.

Elemente mit gleicher Funktion und Wirkungsweise sind in den Figuren 1 mit 10 jeweils mit denselben Bezugszeichen versehen.

Figur 1 zeigt in schematischer Darstellung beispielhaft zwei Funkzellen CE1, CE2 eines Funkkommunikationssystems FCS, das insbesondere nach dem UMTS (Universal Mobile Telecommunication System)-Standard betrieben wird. Die Funkzelle CE1 wird dabei von der Basisstation BS1 funktechnisch aufgespannt, während die zweite Funkzelle CE2 von der Basisstation BS2 aus versorgt wird. Die beiden Basisstationen BS1, BS2 stehen dabei stellvertretend für eine Vielzahl von weiteren, in der Figur 1 nicht dargestellten Basisstationen des Funkkommunikationssystems MCS, die entsprechende Funkzellen aufweisen und abdecken. Die jeweilige Basisstation ist vorzugsweise durch mindestens einen Funksender und mindestens einen Funkempfänger gebildet. Sie weist vorzugsweise mindestens eine Sendeantenne auf. Zusätzlich oder unabhängig zu ihrer Funktion, eine Funkverbindung zu Teilnehmergeräten des Funkkommunikationssystems FCS bereitzustellen, kann die jeweilige Basisstation jeweils für die Daten-/Nachrichtenübermittlung zu einem etwaig vorhandenen Nachrichten-/Datenfestnetz sorgen.

Im Funkkommunikationssystem FCS werden Nachrichten-/Datensignale über mindestens eine vordefinierte Luftschnittstelle zwischen mindestens einem Teilnehmergerät, insbesondere Mobilfunkgerät wie z.B. Handy, und mindestens einer Basisstation vorzugsweise nach einem Zeitmultiplex-Vielfachzugriffs-Übertragungsverfahren übertragen. Es ist vorzugsweise als Mobilfunksystem nach dem UMTS-Standard (= Universal Mobile Telecommunication System) ausgebildet. Insbesondere wird es im sogenannten FDD-Mode (Frequency Division Duplex) betrieben. Im FDD-Mode wird eine getrennte Signalübertragung in Up- und Down-Link-Richtung (Up-Link = Signalübertragung vom Mobilfunkgerät zur jeweiligen Basisstation; Down-Link = Signalübertragung von der jeweilig zugeordneten Basisstation zum Mobilfunkgerät) durch eine entsprechende separate Zuweisung von Frequenzen oder Frequenzbereichen erreicht. Mehrere Teilnehmer in derselben Funkzelle werden vorzugsweise über orthogonale Codes, insbesondere nach dem sogenannten CDMA-Verfahren (= Code Division Multiple Access) getrennt.

Als Teilnehmergeräte sind vorzugsweise Mobilfunktelefone, insbesondere Handys vorgesehen. Daneben können als Teilnehmergeräte auch sonstige Nachrichten- und/oder Datenübertragungsgeräte wie z.B. internetfähige Endgeräte, Computer, Fernsehgeräte, Notebooks, Faxgerät, usw. mit zugeordneter Funkeinheit zum Kommunikationsverkehr "On-air", d.h. über mindestens eine Luftschnittstelle, Komponenten des Funkkommunikationsnetzes sein. Die Teilnehmergeräte halten sich dabei insbesondere mobil bzw. portabel, d.h. an wechselnden Orten im Funknetz auf, können dort aber auch gegebenenfalls ortsfest angeordnet sein.

In der Figur 1 werden die beiden Basisstationen BS1, BS2 über zugehörige Datenleitungen L1, L2 von einer übergeordneten Funknetzwerk-Kontrolleinheit RNC1 aus gesteuert bzw. kontrolliert. Diese überwacht die Zuordnung von Funkressourcen in den Funkzellen CE1, CE2 der Basisstationen BS1, BS2. Im vorliegenden Ausführungsbeispiel halten sich in der Funkzelle CE1 der Basisstation BS1 eine Vielzahl von Teilnehmergeräten UE11 mit UE51 auf. Ebenso sind momentan in der zweiten Funkzelle CE2 der Basisstation BS2 mehrere Teilnehmergeräte UE21 mit UE42 vorhanden. Die Teilnehmergeräte UE11, UE21, UE31 in der ersten Funkzelle CE1 sowie das Teilnehmergerät UE42 in der zweiten Funkzelle CE2 sind vorab einer vordefinierbaren Gruppe MC1 zugeordnet, für die der Empfang von einer oder mehreren Gruppennachrichten in möglichst effizienter Weise bereitgestellt werden soll.

Unter dem Begriff "Gruppe von Teilnehmergeräten" wird im Rahmen der Erfindung vorzugsweise eine Klassifizierung nach technischem Service verstanden, d.h. z.B. insbesondere eine Einteilung nach solchen Teilnehmergeräten, die eine Multicast-Übertragung oder eine Broadcast-Übertragung erlauben. Weiterhin können die Teilnehmergeräte in den Funkzellen des Funkkommunikationsnetzes auch nach einer Vielzahl anderer Kriterien, insbesondere z.B. Art der Gruppennachricht wie z.B. Sportnachrichten, Wettervorhersagen, usw., oder Entstehungsgrund, usw. einsortiert bzw. eingeteilt werden.

Bei vielen in modernen Mobilfunksystemen angebotenen Diensten und Anwendungen ist es insbesondere wünschenswert, Nachrichten nicht nur zu einem, sondern zu zwei und mehreren Mobilfunkteilnehmern zu übertragen. Beispiele für solche Dienste und Anwendungen sind News-Groups, Video-Konferenzen, Video-On-Demand, verteilte Anwendungen, usw.

Eine Möglichkeit, dieselbe Nachricht zu verschiedenen Teilnehmern zu übertragen, wäre, jedem Empfänger-Teilnehmergerät separat eine Kopie der Daten bzw. Nachrichten zuzusenden. Diese Technik wäre zwar einfach zu implementieren, für große Gruppen von Teilnehmergeräten jedoch zu aufwendig. Da dieselbe Nachricht über N (N = Anzahl der Empfänger-Teilnehmergeräte der Nachricht) Einzelverbindungen (= Unicast-Verbindungen) zu übertragen wäre, und dabei mehrfach über gemeinsame Verbindungswege gesendet werden würde, würde diese Vorgehensweise eine zu hohe Bandbreite benötigen.

Demgegenüber bildet die sogenannte Multicast-Übertragung eine bessere Alternative. Hierbei werden die verschiedenen Teilnehmergeräte, denen dieselbe Nachricht übermittelt werden soll, zu einer Gruppe (Multicast-Gruppe) zusammengefaßt und dieser eine einzige, gemeinsame Adresse (Multicast-Adresse) zugeordnet. Die zu übertragenden Daten werden daraufhin nur einmal an diese Multicast-Adresse gesendet. Über gemeinsame Verbindungswege vom jeweiligen Sender zu den Empfängern, hier insbesondere Mobilfunkgeräten, wird die jeweilig zu übertragende Multicast-Nachricht im Idealfall nur einmal gesendet. Es ist dabei nicht erforderlich, daß der Sender weiß, wo und wie viele Empfänger-Teilnehmergeräte sich hinter der spezifischen Multicast-Adresse verbergen. Welches Teilnehmergerät insbesondere zu einer bestimmten, spezifischen Multicast-Gruppe gehört, läßt sich in vorteilhafter Weise netzwerkseitig definieren und verwalten. Auch kann sich das jeweilige Teilnehmergerät bei entsprechender Befugnis selbsttätig zu einer bestimmten Multicast-Gruppe anmelden und/oder wieder abmelden.

Beim sogenannten Broadcast werden als weitere Alternative Nachrichten an alle Teilnehmer innerhalb eines geographischen Gebietes gesendet. Ein solches Gebiet kann beispielsweise durch einen Teil des Gesamtfunknetzes bestimmt sein. Wie beim Multicast wird die Broadcast-Nachricht dabei über gemeinsame Verbindungswege vom Sender zu den einzelnen Empfängern im Idealfall nur einmal gesendet. Jedes Teilnehmergerät ist vorzugsweise in eine entsprechende Broadcast-Group eingetragen, sofern es Broadcast-Pakete dieser Gruppe empfangen will. Es kann somit selbständig bestimmen, ob es alle Broadcast-Nachrichten der jeweiligen Gruppe empfangen oder verwerfen möchte, oder ob es nur bestimmte Nachrichten empfangen möchte.

Um den Stromverbrauch von Mobilfunkgeräten zu reduzieren, fallen diese, wenn beispielsweise keine Verbindung aufgebaut wird bzw. nicht mehr existiert, oder keine eingehenden Anrufe oder Daten vorliegen, in eine Art "Ruhezustand". Im UMTS wird dieser Zustand als sogenannter Idle-Modus bezeichnet. Das jeweilige Mobilfunkgerät hört dabei nur noch auf bestimmte Kanäle. Seine Position ist nur noch "relativ ungenau" netzwerkseitig bekannt. Das heißt, es ist dem Netzwerk nicht bekannt, in welcher Funkzelle sich das jeweilige Mobilfunkgerät gerade befindet. Kommt es nun bei einem solchen, sich im Idle-Modus befindenden Mobilfunkgerät z.B. zu einem eingehenden Ruf, oder zur Übertragung von Daten, so wird es über bestimmte Funkkanäle, auf die es im Idle-Modus hört, über bestimmte Prozeduren darüber benachrichtigt. Das Mobilfunkgerät baut daraufhin eine Signalisierungsverbindung zum Funknetzwerk auf, über die dann die Funkressourcen auf der Luftschnittstelle zwischen der aktuell zugeordneten Basisstation und diesem Mobilfunkgerät für die Übertragung der Nachrichten allokiert und konfiguriert werden.

Das Schichtenmodell der Protokolle auf der Luftschnittstelle in UMTS ist in Figur 2 beispielhaft für das Teilnehmergerät UE11 in der Funkzelle CE1 der Basisstation BS1 dargestellt. Die Mobilfunkstation UE11 weist eine physikalische Schicht (Physical Layer) PL1 auf, die sendeseitig für die Verarbeitung der Daten zur Übertragung über die Luftschnittstelle über physikalische Kanäle PCS verantwortlich ist, und empfangsseitig die empfangenen Daten so an die darüber liegende Medienzugangskontrollschicht MAC1 (MAC = Medium Access Control) weitergibt, daß sie von dieser Schicht weiterverarbeitet werden können. Netzwerkseitig befindet sich die physikalische Schicht in der Basisstation BS1, welche über eine Festnetzverbindung mit der Funknetzwerk-Kontrolleinheit RNC1 (Radio Network Controller) verbunden ist. Die Verbindungen zwischen der physikalischen Schicht und der MAC-Schicht werden Transportkanäle genannt und geben an, wie die Daten übertragen werden (z.B. auf allgemeinen Kanälen, die von jedem Mobilfunkgerät in der Funkzelle der Basisstation gehört werden, oder auf Kanälen, die lediglich einer bestimmten Mobilfunkstation spezifisch gewidmet sind). Die MAC-Schicht hat Aufgaben, wie z.B. die Identifizierung der Nutzer, für die ein zu übertragendes Datenpaket bestimmt ist, falls es auf allgemeinen Kanälen übertragen wird, sowie die Abbildung logischer Funkkanäle auf die Transportkanäle. Dafür fügt die MAC-Schicht sendeseitig Kontrollinformationen wie z.B. die Identität der jeweiligen Mobilfunkstation zu den zu übertragenden Datenpaketen hinzu, die sie von einer weiteren, höheren Schicht RLC (= Radio Link Control) erhalten hat. In der Mobilfunkstation UE11 ist diese RLC-Schicht mit RLC1 bezeichnet. In der Basisstation BS1 hat diese RLC-Schicht das Bezugszeichen RLC2. Als logische Kanäle werden dabei die Verbindungen zwischen der jeweiligen MAC-Schicht wie z.B. MAC1 im Teilnehmergerät UE11 sowie MAC2 in der Funknetzwerk-Kontrolleinheit RNC1 und der jeweilig zugeordneten Funkverbindungskontrollschicht RLC1 bzw. RLC2 (Radio Link Control) bezeichnet. Zur Abbildung der logischen Funkkanäle auf die Transportkanäle fügt die jeweilige MAC-Schicht senderseitig Kontrollinformationen wie z.B. die Identität der jeweiligen Mobilfunkstation zu den zu übertragenden Datenpaketen hinzu, die sie von der jeweilig höheren RLC-Schicht erhalten hat. Empfangsseitig werden diese Kontrollinformationen ausgewertet und wieder von den Datenpaketen entfernt, bevor diese über die logischen Verbindungen an die RLC-Schicht weitergeleitet werden.

Die jeweilige RLC-Schicht RLC1 bzw. RLC2 ist jeweils verantwortlich für die Überwachung der Datenübertragung, d.h. für die Feststellung von fehlenden Datenpaketen und eventuell deren erneute Anforderung. In der RLC-Schicht können mehrere Einheiten definiert werden. Jede RLC-Einheit weist dabei mindestens eine Verbindung zwischen höheren Schichten und RLC-Schicht (z.B. Radio Bearer RB) auf. Auch die RLC-Schicht kann sendeseitig den Paketen, die sie von höheren Schichten bekommen hat, Kontrollinformationen hinzufügen. Diese Kontrollinformationen werden empfangsseitig genutzt, um z.B. zu beurteilen, ob Pakete fehlen. Sie werden von den Paketen entfernt, bevor diese wieder an die höheren Schichten weitergeleitet werden. Oberhalb der RLC-Schicht befindet sich die Funkressourcen-Kontrollschicht RRC (Radio Ressource Control). Im einzelnen ist diese hier beim Teilnehmergerät UE11 mit RRC1 sowie bei der zugeordneten Funknetzwerk-Kontrolleinheit RNC1 mit RRC2 bezeichnet. Die jeweilig RRC-Schicht ist für die Konfiguration der unter ihr liegenden Schichten und vor allem für den Verbindungsaufbau verantwortlich. Die Verbindungen zwischen der jeweiligen RLC-Schicht und der RRC-Schicht werden SRBs (Signalling Radio Bearers) genannt und sind für das Teilnehmergerät UE11 mit RRC1 sowie für die Funknetzwerk-Kontrolleinheit RNC1 mit SRB2 bezeichnet.

Außerdem befinden sich oberhalb der jeweiligen RLC-Schicht die sogenannten RBs (Radio Bearer), die für die eigentliche Datenübertragung verwendet werden und die Verbindung zwischen der RLC-Schicht und der darüber liegenden Anwendung darstellen. Werden Paketdaten übertragen, befindet sich oberhalb der jeweiligen RLC-Schicht noch die sogenannte Paketdaten-Konvergenzschicht (PDCP = Packet Data Convergence Protocol), wie z.B. hier PDCP1 für das Teilnehmergerät UE11 sowie PDCP2 für die Funknetzwerk-Kontrolleinheit RNC1, die z.B für die Komprimierung von IP-Paketen (Internet Protokoll) zuständig ist. Weiterhin befindet sich oberhalb der RLC-Schicht des Teilnehmergeräts UE11 sowie der Funknetzwerkkontrolleinheit RNC1 der Basistation BS1 jeweils noch die sogenannte Broadcast-Multicast-Kontrollschicht BMC1 bzw. BMC2 (BMC = Broadcast Multicast Controller), welche für den Empfang von etwaigen Cell-Broadcast-Nachrichten verwendet wird. In der jeweiligen BMC-Schicht können ähnlich wie für die RLC-Schicht mehrere BMC-Einheiten definiert sein.

Teilnehmergeräte (=UEs=user equipment) können sich in verschieden Zuständen befinden. Diese Zustände beschreiben u.a., ob das jeweilige Teilnhemergerät eine Signalisierungsverbindung zum Netzwerk aufgebaut hat, oder ob es sich im "Ruhe"-Modus befindet, auf welche Kanäle es hört, und wo es im Netzwerk bekannt ist:

-    Im RRC Zustand CELL_DCH state sind der jeweiligen Mobilfunkstation dedizierte Ressourcen zugewiesen und die Mobilfunkstation ist auf Zellebene bekannt, d.h. dem Netzwerk ist bekannt, in welcher Zelle sich die Mobilfunkstation befindet.

-    Im RRC Zustand CELL_FACH state sind der jeweiligen Mobilfunkstation allgemeine Ressourcen zugewiesen, die sie sich mit anderen Mobilfunkstationen teilt. In diesem Zustand ist die Mobilfunkstation ebenfalls auf Zellebene bekannt.

-    Im RRC Zustand CELL_PCH state empfängt die Mobilfunkstation Broadcast Nachrichten vom Netzwerk und hört auf die Benachrichtigungskanäle PICH (Paging Indicator Channel) und PCH (Paging Channel), über die das Netzwerk der Mobilfunkstation mitteilen kann, daß z.B. Nachrichten für es vorliegen. Die Mobilfunkstation ist in diesem Zustand auf Zellebene bekannt.

-    Der RRC Zustand URA_PCH state ist ähnlich dem CELL_PCH state mit dem Unterschied, daß die Funkzelle, in der sich die Mobilfunkstation befindet, dem Netzwerk nicht genau bekannt ist, sondern das Netzwerk lediglich Kenntnis hat, in welcher Gruppe von Zellen, sich die Mobilfunkstation aufhalten könnte.

-    Im Idle Mode empfängt die Mobilfunkstation ebenfalls Broadcast Nachrichten vom Netzwerk und hört auf die Benachrichtigungskanäle. Im Gegensatz zu URA_PCH und Cell_PCH state, hat die Funkressourcen Kontrolleinheit RNC jedoch keine Kenntnis über die Mobilfunkstation selber und auch nicht darüber, ob sich die Mobilfunkstation in einer der von ihr kontrollierten Zellen befindet.

Teilnehmergeräte im Idle und Connected Modus (CELL_DCH und CELL_FACH state) können über einen bestimmten Mechanismus über verschiedene Ereignisse informiert werden. Dies kann beispielsweise ein eingehender Ruf oder der Beginn der Übertragung von Daten sein. Der Benachrichtigungsmechanismus des Pagings, d.h. das Ausrufen einer zur Versendung anstehenden Nachricht, erfolgt vorzugsweise in zwei Stufen. Im ersten Schritt teilt das Funknetzwerk der jeweiligen Mobilfunkstation durch einen Indikator auf dem sogenannten Paging Indicator Channel PICH, d.h. allgemein ausgedrückt auf einem eigens vorgesehenen, ersten separaten Funkanal mit, daß Nachrichten auf dem Paging Channel PCH, d.h. einem weiteren, zweiten separaten Funkanal für die Mobilfunkstation abholbereit vorliegen und anschließend versendet werden. Im zweiten Schritt liest die jeweilige Mobilfunkstation den PCH-Kanal zumindest teilweise aus, in dem die eigentliche Benachrichtigung, insbesondere der Grund für das Paging (Paging Type, Paging Record, Paging Cause) enthalten ist. Das jeweilige Teilnehmergerät erkennt aus diesen Informationen, ob es sich um eine Nachricht handelt, die spezifisch an es gerichtet ist, und um was für eine Nachricht es sich handelt.

Nur wenn das Teilnehmergerät positiv feststellt, daß die zu übertragende Nachricht an dieses Teilnehmergerät tatsächlich adressiert ist, baut dieses eine Signalisierungsverbindung zum Funknetzwerk auf, über die dann die Funkressourcen für die Übertragung der Nachrichten allokiert, d.h. zugewiesen bzw. bereitgestellt, und konfiguriert werden.

Beim Mechanismus für das Paging werden vorzugsweise zwei Typen unterschieden, die sich dadurch unterscheiden, in welchem Zustand sich das jeweilig zu benachrichtigende Teilnehmergerät befindet:

- Paging Type 1: Diese Prozedur wird genutzt, um Paging Informationen an bestimmte UEs im Idle mode, CELL_PCH oder URA_PCH Stadium zu senden. Als logischer Kanal wird dafür der sogenannte Paging Control Channel (PCCH) genutzt. Höhere Schichten im Netzwerk können ein Paging veranlassen, um z.B. den Aufbau einer Signalisierungsverbindung zu veranlassen.

- Paging Type 2: Diese Prozedur wird genutzt, um dedizierte, d.h. spezifische Paging Informationen an ein bestimmtes Teilnehmergerät, abgekürzt UE, im connected mode im CELL_DCH oder CELL_FACH Stadium zu übertragen.

Im Rahmen des nachfolgenden Ausführungsbeispiels ist insbesondere der Paging Type 1 von Interesse, da hier der Fall betrachtet wird, daß eine Gruppe von Multicast-Teilnehmergeräten bzw. Mobilfunkgeräten ohne dedizierte Verbindung zum Netzwerk über einen Paging Indikator über das Eintreffen von Multicast-Nachrichten informiert werden soll. Ggf. kann in analoger Weise mit derselben Methode auch das jeweilige Teilnehmergerät im connected mode im CELL_DCH oder CELL_FACH state über das Eintreffen neuer Multicast-Nachrichten informiert werden. Der physikalische Funkkanal S-CCPCH (Secondary Common Control Physical Channel) in UMTS überträgt Informationen des Transportkanals PCH (paging channel) und/oder des FACH (Forward Access Channel). Der Paging-Kanal PCH wird über den S-CCPCH übertragen, wenn ein Teilnehmergerät Paging -Informationen empfangen soll. In der System Information (SIB 5 und/oder 6 = System Information Block 5 und/oder 6) werden gemeinsame Funkkanäle wie z.B. der S-CCPCH definiert, die für alle in einer Funkzelle momentan befindlichen Mobilfunkgeräte bereitgestellt werden. Jeder S-CCPCH, der einem Teilnehmergerät in der Systeminformation zugewiesen wird, kann vorzugsweise bis zu einen Paging Kanal PCH beinhalten. In einer Funkzelle können entweder ein oder mehrere PCHs bereitgestellt werden. Jedem PCH wird vorzugsweise genau ein Paging Indikator-Funkkanal PICH in definierter Weise zugeordnet. Für den Fall, daß mehr als ein Paging Kanal PCH (und zugehöriger, fest zugeordneter Paging Indikator-Funkkanal PICH) in der System Information definiert ist, führt das jeweilige Teilnehmergerät eine Selektion dahingehend aus, auf welchen Paging-Funkkanal es dann nachfolgend hört, d.h. empfangsbereit geschaltet ist. Dafür wählt das jeweilige Teilnehmergerät einen der aufgelisteten Funkkanäle S-CCPCH aus, vorzugsweise basierend auf der spezifischen International Mobile Subscriber Identity IMSI des jeweiligen Teilnehmergeräts:

$$\text{"Index des gewählten S-CCPCH"} = \text{IMSI mod K,}$$

wobei K gleich der Anzahl der in der Systeminformation aufgeführten S-CCPCHs ist, die einen Paging Kanal PCH übertragen. Mit anderen Worten heißt das, daß die Funkkanäle S-CCPCH, die nur einen FACH-Funkkanal (Forward Access Channel) transportieren, nicht mitgezählt werden. Die S-CCPCH werden vorzugsweise in der Reihenfolge indiziert, wie sie in der System Information erscheinen (0 bis K-1). Die Funkkanäle S-CCPCH, die einen Paging Kanal PCH transportieren, werden in der System Information als erste aufgeführt. "Index des gewählten S-CCPCH" identifiziert den gewählten S-CCPCH mit demjenigen PCH und demjenigen zugewiesenen PICH, der vom jeweiligen Teilnehmergerät wie z.B. UE11 genutzt werden soll.

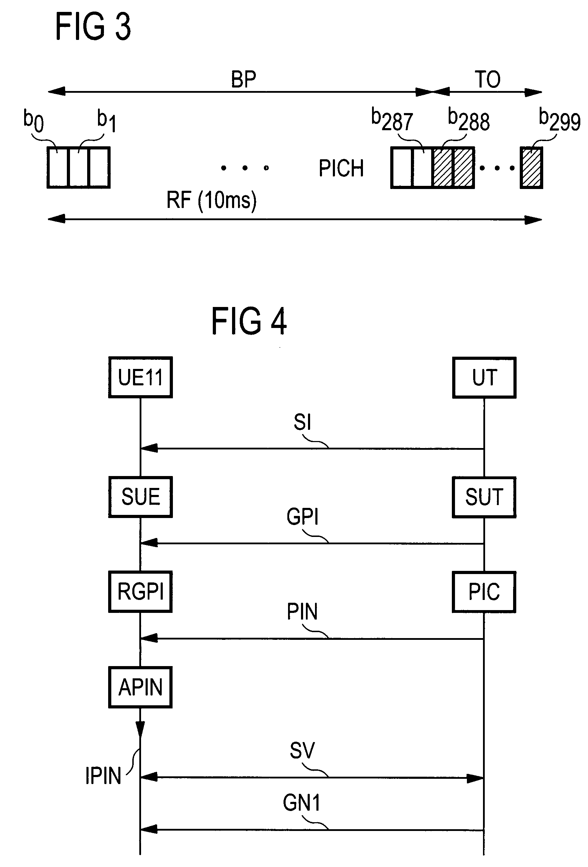

Der Paging Indikatorkanal bzw.- Channel PICH ist ein physikalischer Kanal, der genutzt wird, um Paging-Indikatoren zu übertragen. Der PICH ist vorzugsweise immer in definierter Weise einem S-CCPCH zugeordnet, der einen PCH Transportkanal überträgt. Figur 3 zeigt den Aufbau der Rahmenstruktur RF des PICH für den UMTS-FDD Mode( Frequency Division Duplex). Ein PICH Rahmen dauert vorzugsweise 10 ms und ist insbesondere 300 bits (($b_0$, $b_1$, ..., $b_{299}$) lang. Von diesen werden die ersten 288 bits ($b_0$, $b_1$, ..., $b_{287}$) genutzt, um Paging Indikatoren zu übertragen. Die verbleibenden 12 bits sind daher formell gesehen nicht Teil des PICH und sollen nicht übertragen werden. Dieser Teil des PICH Rahmens ist reserviert für zukünftige Anwendungen. Während also ein erster Teilabschnitt BP der Rahmenstruktur RF des Transportkanals PCCH zu Belegung mit Paging-Indikatoren vorreserviert ist, ist ein zweiter, hier endseitiger Teilabschnitt TO noch frei.

In jedem PICH Rahmen werden $Np$ ($Np$ = 18, 36, 72 oder 144) Paging Indikatoren übertragen. Welcher der Paging Indikatoren ($P_q$) welchem UE zugeordnet ist, wird dabei zweckmäßigerweise durch höhere Protokollschichten in der Sende-/Empfangseinheit des jeweiligen Teilnehmergeräts und/oder der jeweilig zugeordneten Basisstation bzw. deren zugewiesener Funknetzwerkkontrolleinheit berechnet. Der Index ‚q' gibt dabei die Position innerhalb des jeweiligen PICH Rahmens an und wird vorzugsweise berechnet als:

$$q = \left( PI + \left\lfloor \left( \left( 18 \times \left( SFN + \lfloor SFN/8 \rfloor + \lfloor SFN/64 \rfloor + \lfloor SFN/512 \rfloor \right) \right) \bmod 144 \right) \times \frac{Np}{144} \right\rfloor \right) \bmod Np$$

'PI' wird dabei von höheren Schichten für jedes UE insbesondere berechnet als:

PI = (IMSI div 8192) mod Np [3GPP TR 25.304]

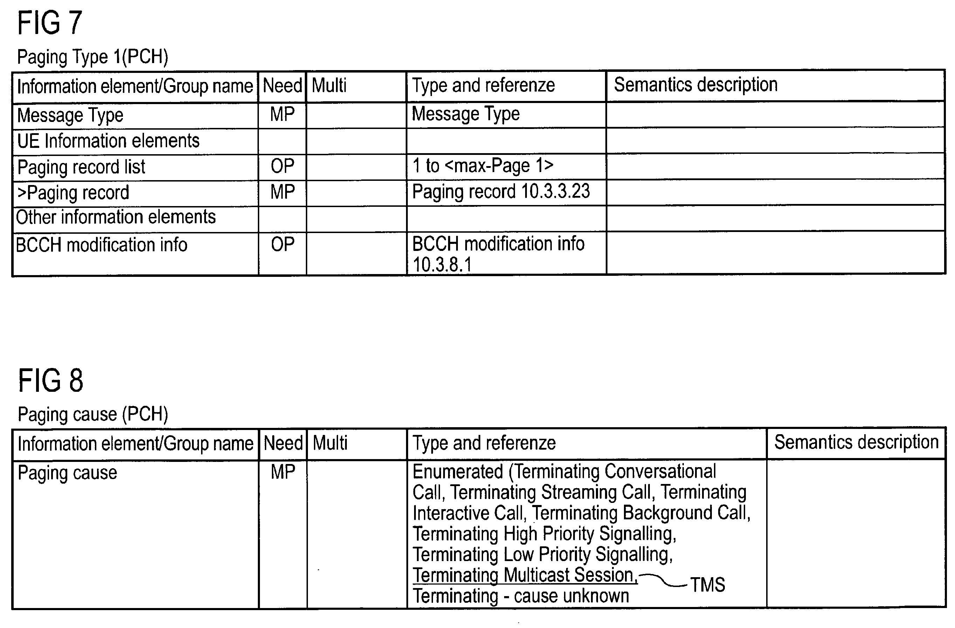

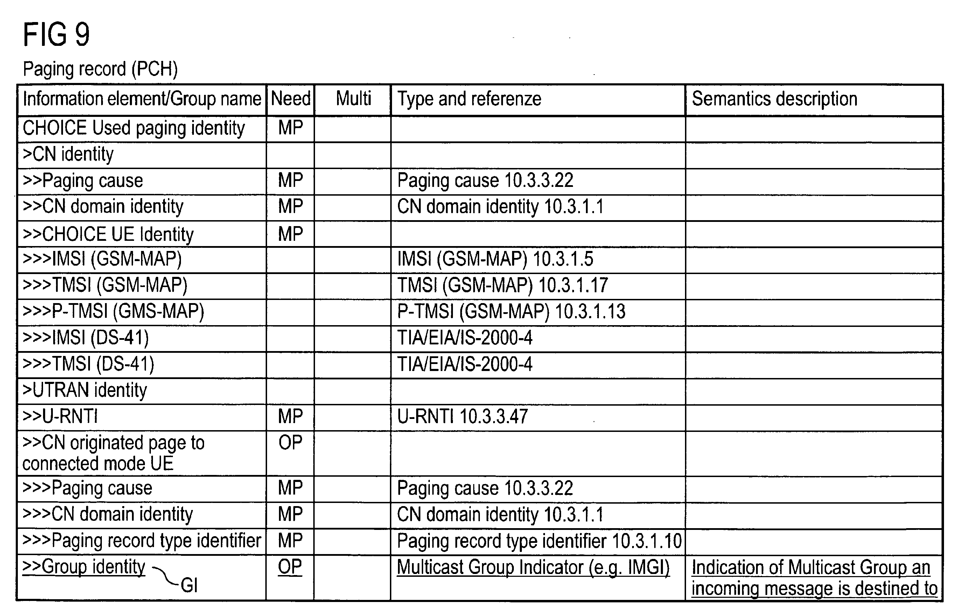

SFN ist dabei die 'System Rahmen' Nummer (SFN= System Frame Number) des P-CCPCH (Primary CCPCH), während dem der PICH auftritt. Dadurch, daß q eine Funktion von *SFN* ist, wechselt die Position des einem UE zugeordneten Paging Indikators ständig. Die IMSI (International Mobile Subscriber Identity) ist jedem Mobilfunkgerät zugeordnet und identifiziert diese eindeutig.
Wenn ein Paging Indikator in einem bestimmten PICH-Rahmen auf logisch "1" gesetzt ist, liest daraufhin das diesem Paging-Indikator zugeordnete Teilnehmergerät (=UE) den PCH des entsprechenden S-CCPCH.
Nachdem ein Teilnehmergerät mit Hilfe des Paging Indikators auf dem PICH über ein neues Ereignis informiert worden ist, wird es zweckmäßigerweise nun noch den konkreten Grund dafür in Erfahrung bringen. Dies ist insbesondere von Vorteil, da es bei der Berechnung, welcher Paging-Indikator innerhalb eines PICH Rahmens welchem UE zugeordnet ist, passieren kann, daß zwei oder mehr UEs auf denselben Paging-Indikator hören. Ob das Paging nun für das jeweilige Teilnehmergerät spezifisch bestimmt ist, und was der genaue Grund für das Paging ist, erfährt das jeweilige Teilnehmergerät, indem es verschiedene Informationselemente liest, die auf dem Paging Channel (PCH) übertragen werden, der wiederum auf den zuvor bestimmten S-CCPCH abgebildet ist:
Als erstes liest das jeweilig betroffene Teilnehmergerät entsprechend Figur 7 das Informationselement ,Paging Type 1' auf dem jeweilig zugewiesenen PCH. Es wird dadurch unter anderem darüber informiert, wie viele "Anlässe" für das Paging vorliegen. Es erhält zudem einen Verweis auf das Informationselement ,Paging Record' entsprechend Figur 8. Durch dieses Informationselement erhält es unter anderem die Information, ob das durch das Paging bekannt gemachte Ereignis für es selbst oder für ein anderes Teilnehmergerät bestimmt ist. Desweiteren erhält es einen Verweis auf das Informationselement ,Paging Cause' entsprechend Figur 9, in dem dann wiederum der genaue Grund für das Paging beschrieben ist. Dies kann u.a. ein eingehender Ruf oder der Beginn einer Datenübertragung sein. Die in den Figuren 7, 8 und 9 dargestellten Informationselemente mit den nicht unterstrichenen, d.h. gesondert markierten Mitgliedselementen sind insbesondere bereits entsprechend der 3GPP Spezifikation [3GPP TS 25.331] spezifiziert.
Wie bereits zuvor beschrieben, kennt das jeweilige Teilnehmergerät nun den Grund für die Benachrichtigung und baut eine Signalisierungsverbindung zum Netzwerk auf, über die dann entsprechende Ressourcen zur Übertragung der Nachricht bzw. Daten bereitgestellt werden.
Nach dem Stand der Technik werden Mobilfunkgeräte, die über das Eintreffen einer Nachricht bzw. eines eingehenden Rufes, den Beginn einer Übertragung von Daten oder ähnlichen Anlässen informiert werden sollen, bisher dediziert, das heißt Mobilfunkgeräte - spezifisch, via sogenanntem Paging benachrichtigt.
Bei verschiedenen Diensten und Anwendungen sollen oftmals Nachrichten nicht nur zu einem, sondern zu zwei und mehreren Mobilfunkteilnehmern übertragen werden. Dies ist allgemein beispielsweise beim Multicast, und speziell im UMTS insbesondere beim Multimedia Broadcast / Multicast Service (MBMS) der Fall. Im folgenden wird hierbei von einem "Gruppen Service" gesprochen, wobei ein ,Gruppen Service' mehrere Gruppen (z.B. Lotto, Börsenkurse, Wetter, ...) bzw. Klassen enthalten kann.
Nach dem Stand der Technik müßten die Teilnehmer solcher ,Gruppen Services' dediziert, das heißt über einzelne, den Mobilfunkgeräten zugewiesene Paging Indikatoren über ankommende Nachrichten informiert werden (=1 Paging Indikator pro Mobilfunkgerät). Befänden sich z.B. in einer Funkzelle 50 Mobilfunkgeräte, die alle zur selben Gruppe eines ,Gruppen Service' eingetragen sind, so würden diese mit Hilfe von 50 spezifischen Paging Indikatoren über das Eintreffen einer entsprechenden Nachricht informiert werden.
Demgegenüber ist Kern des erfindungsgemäßen Prinzips die Einführung eines Gruppen-Pagingindikators für ,Gruppen Services', bei denen eine Nachricht an eine Gruppe von Teilnehmern gesendet werden soll, insbesondere Multicast Services.
Vorteilhaft wird dieser Gruppen- Pagingindikator verwendet, um eine Gruppe von ein oder vorzugsweise mehreren Mobilfunkgeräten, die z.B. bestimmte Dienste oder Services empfangen möchten (,bei denen eine Nachricht an eine Gruppe von Teilnehmern gesendet werden soll (insbesondere Multicast Services)) über das Eintreffen von solchen Gruppen-Nachrichten o.ä. - Anlässen zu informieren.
Dieser ,Gruppen Paging Indikator' ist gegenüber dem Stand der Technik also nicht einem einzelnen Teilnehmergerät spezifisch zugeordnet, sondern einer Gruppe von ein oder mehreren Teilnehmergeräten. Diese Teilnehmergeräte bzw. UEs haben dabei zweckmäßigerweise gemeinsam, daß sie alle denselben ,Gruppen Service', insbesondere Multicast Service nutzen. Das bedeutet, daß sie mindestens einer Gruppe von Empfängern eines bestimmten ‚Gruppen Services', insbesondere Multicast Service zugehören (= lediglich 1 Paging Indikator pro Service, insb. Multicast Service).

Folgende Verfahrensschritte sind zur Sicherstellung von gruppenweisem Paging zweckmäßig:

- In einem ersten Schritt ermittelt das jeweilige Mobilfunkgerät (UE), das zu einem ‚Gruppen Service', insbesondere Multicast Service eingeschrieben ist, auf welchen der S-CCPCHs einer Funkzelle, die einen PCH transportieren, es zweckmäßigerweise hört.
- In einem zweiten Schritt wird ein Gruppen-Pagingindikator innerhalb eines PICH Rahmens bestimmt, der der jeweiligen Gruppe von Mobilfunkgeräten (UEs) zugeordnet ist, die einem ‚Gruppen Service', insbesondere Multicast Service, zugehören.
- In einem dritten Schritt werden vorzugsweise bereits vorhandene Informationselemente, aus denen ein Mobilfunkgerät den Grund für das Paging erfährt, erweitert, damit ein Mobilfunkgerät daraus u.a. erkennt, für welche Multicast Gruppe eine Nachricht abgestellt ist. Diese Informationselemente können darüber hinaus evtl. auch noch weitere Informationen enthalten.

Aus der System Information erhält das jeweilige Teilnehmergerät Informationen über die S-CCPCHs, die in einer Funkzelle bereitgestellt werden, und ob diese einen PCH transportieren. Jedem S-CCPCH ist vorzugsweise fest ein PICH zugeordnet. Das Teilnehmergerät bestimmt bzw. berechnet daraufhin, auf welchen S-CCPCH / PCH und PICH es zweckmäßigerweise hört, und welcher Gruppen-Pagingindikator eines PICH Rahmens einem ‚Gruppen Service', insbesondere Multicast Service zugeordnet ist.

Nach Erhalt eines ‚Gruppen Paging Indikators', insbesondere Multicast Paging Indikators, der auf dem PICH übertragen wird, hört das Mobilfunkgerät zweckmäßigerweise daraufhin auf den zugeordneten PCH. Auf dem PCH werden dann Informationselemente übertragen, die in vorteilhafter Weise Informationen darüber enthalten, an welche Gruppe, insbesondere Multicast Gruppe, die eingetroffene Nachricht gerichtet ist (siehe Informationselemente Paging Type 1, Paging Record, Paging Cause in den Figuren 7, 8, 9). Gehört ein Mobilfunkgerät der entsprechenden Gruppe an, wird daraufhin eine Signalisierungsverbindung zum Mobilfunknetz aufgebaut, über die dann die Ressourcen zur Übertragung der Nachricht allokiert werden.

Vorteilhaft ist dabei, dass alle Mobilfunkgeräte durch einen gemeinsamen ‚Gruppen Paging Indikator' über das Eintreffen einer Gruppen Nachricht, insbesondere Multicast Nachricht benachrichtigt werden. Nach dem Stand der Technik müssten dafür N (N = Anzahl der MC Teilnehmer in der Funkzelle) Paging Indikatoren verwendet werden, was zu aufwendig und zu wenig effektiv wäre.

Ein zweckmäßiger Ablauf des erfindungsgemäßen Verfahrens zur Benachrichtigung einer Gruppe von Empfängern über einen gemeinsamen ‚Gruppen Paging Indikator' ist in der Figur 4 dargestellt:

Das jeweilige Teilnehmergerät (=UE) empfängt System- Informationen SI von mindestens einer Komponente, insbesondere Basistation des Funknetzwerkes UT (in UMTS ist dies UTRAN= universal terrestrial radio access network) und liest daraus, welche S-CCPCHs in der Funkzelle übertragen werden, und welche dieser S-CCPCHs einen PCH übertragen. Jedem S-CCPCH, der einen PCH überträgt, ist fest ein PICH zugeordnet. Das Netzwerk bestimmt in einem Schritt SUT vorher, auf welchem S-CCPCH Gruppen- Informationen übertragen werden sollen. Das UE bestimmt in einem entsprechenden Schritt SUE, auf welchen der S-CCPCHs / PCHs und zugehörigen PICHs es zweckmäßigerweise hört. Mögliche Varianten für diese Bestimmung sind in einem nachfolgenden Abschnitt angegeben.

Steht nun die Übertragung einer Gruppennachricht GN1 für eine Gruppe des ‚Gruppen Service' bevor, so sendet das Netzwerk (‚insbesondere UTRAN,) UT ein entsprechendes Gruppen- Pagingindikatorsignal GPI auf dem vorher ausgewählten PICH (2, Abb.4). Alle UEs, die zu einer Gruppe des ‚Gruppen Service' eingeschrieben sind, lesen im nächsten Schritt RGPI dieses Gruppen-Pagingindikatorsignal GPI und erkennen, daß nun eine Gruppennachricht GN1 übertragen werden soll. Welcher Gruppen-Pagingindikator innerhalb eines PICH Rahmens dem jeweiligen ‚Gruppen Service' spezifisch zugeordnet ist, wird zuvor im Netzwerk und in den UEs bestimmt. Mögliche Varianten dafür sind in einem nachfolgenden Abschnitt angegeben.

Um in Erfahrung zu bringen, ob die jeweilig ankommende Gruppen-Nachricht das jeweilige Teilnehmergerät spezifisch betrifft, weil es Mitglied der entsprechenden Gruppe ist, liest dieses in einem weiteren Schritt APIN die Paging Informationen PIN (‚insbesondere die Informationselemente Paging Type 1, Paging Record und Paging Cause entsprechend der Figuren 7 mit 9), die auf dem PCH übertragen werden. Im Feld bzw. Informationselement Paging record steht unter anderem insbesondere eine Gruppenidentität GI (vgl. Figur 9), die eine bestimmte Gruppe des ‚Gruppen Service' identifiziert. Weitere mögliche Varianten sind in nachfolgenden Abschnitten angegeben.

Erkennt das jeweilige Teilnehmergerät aufgrund der übertragenen Paging-Informationen PIN, daß die anstehende bzw. ankommenden Gruppennachricht GN1 für es nicht interessant ist, so fällt es wieder in den Zustand zurück, indem es sich zuvor befand. Erkennt das UE, dass die ankommende Gruppennachricht GN1 für es interessant ist, so baut es nun eine Signalisierungsverbindung SV auf, über die daraufhin die Ressourcen zur anschließenden Übertragung der Gruppennachricht allokiert und konfiguriert werden.

Für die Bestimmung, auf welchem S-CCPCH bzw. PCH und zugeordneten PICH ein Teilnehmergerät, das zu einem ‚Gruppen Service' eingetragen ist, Signalisierungsdaten empfängt, gibt es verschiedene Möglichkeiten:

- In der wohl zweckmäßigsten Variante hören alle UEs, die zu einem ‚Gruppen Service' eingetragen sind, auf den gleichen S-CCPCH. Die Information, auf welchen S-CCPCH die UEs zu hören haben, steht dabei in der System Information (SIB 5/6). Dafür wird die System Information zweckmäßigerweise um zusätzliche Informationselemente erweitert.

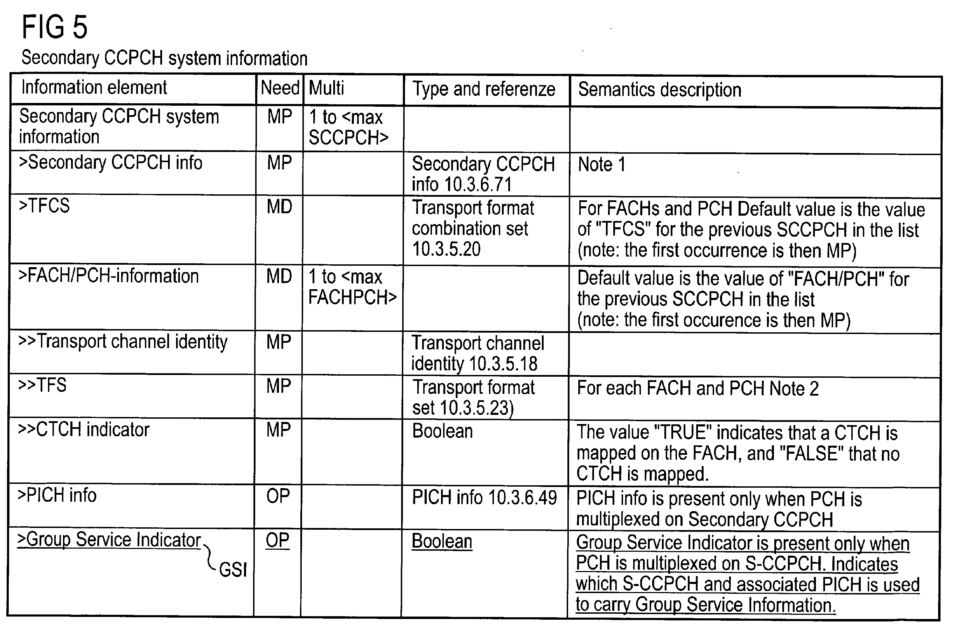

  Figur 5 zeigt dies am Beispiel des Informationselementes "Secondary CCPCH system information" [3GPP TS 25.331, Kapitel 10.3.6.72], das in SIB 5 und 6 übertragen wird. Hinzugefügt wird dort gegenüber dem Stand der Technik ein sogenannter "Group Service Indicator", der angibt, ob und welcher S-CCPCH, der einen PCH transportiert (und zugehöriger PICH), für die Übertragung von ‚Gruppen Service' Informationen genutzt wird. Die Änderungen gegenüber dem Stand der Technik sind markiert.

- Eine weitere Möglichkeit ist, daß immer der gleiche, vordefinierte S-CCPCH für die Übertragung von Informationen, die eine Empfängergruppe betreffen, genutzt wird.

  Dies kann z.B. immer der erste oder der letzte der in der System Information definierten S-CCPCHs sein.

  Der zugeordnete PICH überträgt den Gruppen Pagingindikator. Der S-CCPCH überträgt den PCH, über den vorzugsweise Informationen über den Grund des Pagings übertragen werden.

- UEs, die zu einem ‚Gruppen Service' eingetragen sind, hören alle auf den gleichen S-CCPCH. In den höheren Protokollschichten eines UEs wird berechnet, auf welchen S-CCPCH es zu hören hat. Für diese Berechnung wird in vorteilhafter Weise eine ‚Gruppen Service' Identität genutzt, die den entsprechenden UEs zweckmäßigerweise bekannt ist oder bekannt gemacht wird. Bei Verwendung einer gruppenspezifischen (<u>nicht</u> ‚Gruppen Service'-spezifischen) Identität wie beispielsweise der IMGI (International Mobile Group Identifier) wird bei der Berechnung des jeweilig zugeordneten S-CCPCHs zweckmäßigerweise sichergestellt, daß trotz unterschiedlicher Gruppen Identitäten desselben ‚Gruppen Service' für alle UEs der gleiche S-CCPCH (und zugehöriger PICH) berechnet wird. Für den Fall, daß UEs unterschiedliche S-CCPCHs für die Übertragung von ‚Gruppen Paging' Informationen berechnen, werden zweckmäßigerweise auf jedem dieser S-CCPCHs die entsprechenden Informationen übertragen. Der zugeordnete PICH überträgt den Gruppen Pagingindikator wie z.B. GPI1. Der S-CCPCH überträgt den PCH, über den Informationen über den Grund des Pagings übertragen werden.

- Auf allen in einer Funkzelle übertragenen S-CCPCHs, die PCHs übertragen, werden ‚Gruppen Service' Informationen übertragen. Das heißt, auf allen zugeordneten PICHs werden die ‚Gruppen Pagingindikatoren' übertragen. Auf allen PCHs werden somit vorteilhaft Informationen über den Grund des Pagings übertragen, was allerdings eine relativ hohe Redundanz bedingt.

Folgende Möglichkeiten zur Auswahl eines Gruppen- Pagingindikators innerhalb eines PICH Rahmens sind zweckmäßig, um den Teilnehmergeräten einer angesprochenen, betroffenen Gruppe über Ereignisse bezüglich eines ‚Gruppen Service' oder einer sonstigen anstehenden Gruppennachricht signalisieren zu können (z.B. ankommende Nachricht usw.):

Nutzt man einen Gruppen-Pagingindikator für alle Gruppen des ‚Gruppen Services', so wird ein UE dadurch beim Eintreffen einer Nachricht informiert, daß diese nun vorliegt. Zusätzlich sollen hier noch zwei weitere sekundäre Möglichkeiten betrachtet werden:

- Nutzt man einen Gruppenpagingindikator pro Gruppe eines ‚Gruppen Service', so kann ein UE, das zu dem ‚Gruppen Service' eingeschrieben ist, bereits an diesem Gruppenpagingindikator erkennen, ob es sich um eine Nachricht von Interesse handelt (Nachteil: Bei vielen Multicast (MC-) Gruppen werden viele Gruppenpagingindikatoren benötigt).
- Nutzt man einen Gruppenpagingindikator für bestimmte MC Gruppen (Untermenge aller MC Gruppen eines ‚Gruppen Service'), so kann ein UE, das zu dem ‚Gruppen Service' eingeschrieben ist, bereits am Gruppenpagingindikator vorselektieren, ob die eingehende Nachricht für es spezifisch, d.h. für sich interessant ist. Für welche Gruppe die Nachricht wirklich ist, erfährt das Teilnehmergerät dann erst aus dem Paging Cause.

Bei der Berechnung bzw. Festlegung, welche Paging Indikatoren innerhalb eines PICH Rahmens für welche ‚Gruppen Services' genutzt werden, kann es zweckmäßig sein, dass anderen UEs, die auf den selben PICH hören, möglichst selten der selbe Gruppen-Pagingindikator zugewiesen wird. Dies gilt sowohl für UEs, die anderen ‚Gruppen Services' zugehören, als auch für UEs, die zu keinem ‚Gruppen Service' eingeschrieben sind. Dies hat den Vorteil einer Effizienzsteigerung des Verfahrens.

Erreicht werden kann dies zum Beispiel dadurch, daß

- Paging Informationen unterschiedlicher MC Services und Gruppen auf verschiedenen PICHs und PCHs gesendet werden.
- für PICHs, die ‚Gruppen Paging Indikatoren' und PICHs, die keine ‚Gruppen Paging Indikatoren' übertragen, unterschiedliche DRX Zyklen verwendet werden. PICHs werden von UEs nicht in jedem Rahmen empfangen, sondern in regelmäßigen Abständen, sog. DRX Zyklen (z.B. zur Energieersparnis). Durch die Verwendung unterschiedlicher DRX Zyklen für PICHs mit und ohne ‚Gruppen Paging Indikatoren' kann man "Doppelbelegungen" von Paging Indikatoren verhindern.

Kommt es aber doch zu dem Fall, daß zwei oder mehr UEs der selbe Paging Indikator zugeordnet wird, so ist es zweckmäßig, daß diese UEs den Grund für das Paging, und für wen das Ereignis tatsächlich interessant ist, aus entsprechenden Informationselementen lesen.

Die Berechung bzw. Festlegung, welcher Gruppenpagingindikator innerhalb eines PICH Rahmens welchem ‚Gruppen Service' zugeordnet ist, wird vorzugsweise durch höhere Schichten ausgeführt.

Für die Berechnung der Positionen ‚q' des jeweiligen Gruppen-Pagingindikators wie z.B. GPI1 kann beispielsweise eine Gruppen Identität (z.B. IMGI, International Mobile Group Identity) genutzt werden. Die Formel zur Berechnung von 'GPI1' könnte dann z.B. folgendermaßen aussehen:

$$GPI1 = (IMGI \; div \; 8192) \; mod \; Np$$

Eine andere Möglichkeit ist, daß immer der gleiche vordefinierte Gruppen-Pagingindikator für ‚Gruppen Service' Zwecke verwendet wird. Beispielsweise kann dies immer der erste oder letzte Gruppen- Pagingindikator in einem PICH Rahmen oder irgend ein anderer sein. Welcher Gruppen-Pagingindikator innerhalb eines PICH Rahmens für ‚Gruppen Services' reserviert ist, kann beispielsweise durch Erweiterung entsprechender Informationselemente bekannt gemacht werden.

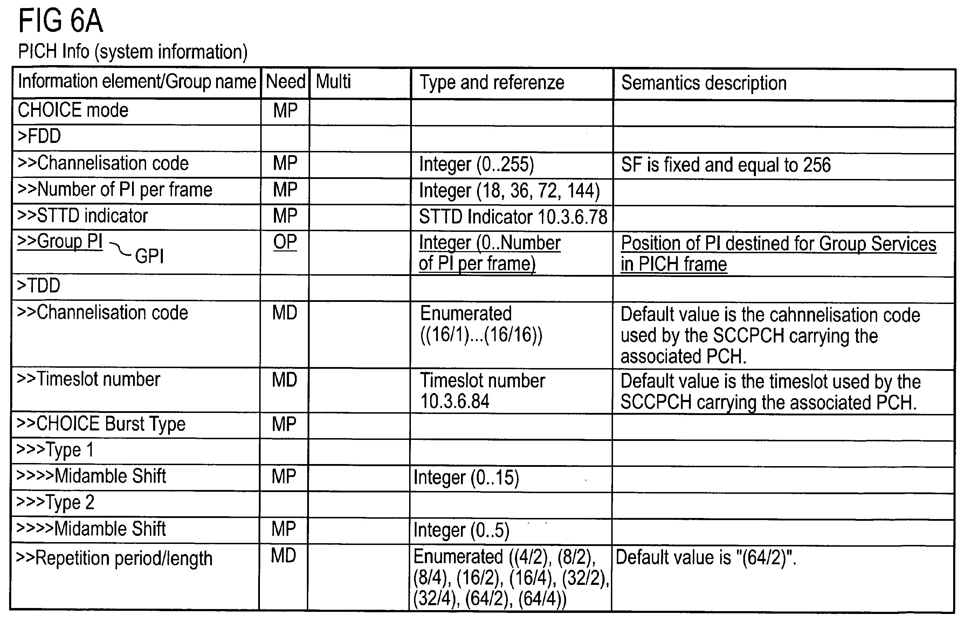

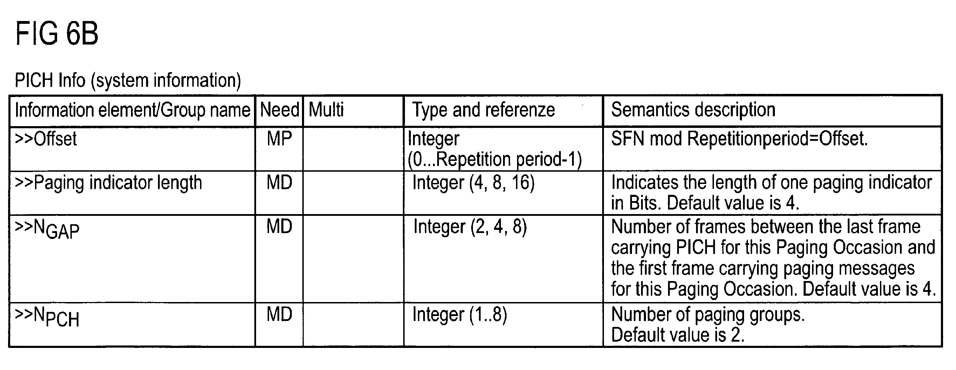

In Figur 6 6 ist das Informationselement ‚PICH Info' [3GPP TS 25.331, Kapitel 10.3.6.49] durch eine zusätzliche Information GPI mit dem Namen ‚Group PI' erweitert. Dieses Informationselement gibt die Position eines Gruppen-Pagingindikators innerhalb eines PICH Rahmens an, der einem ‚Gruppen Service' zugeordnet ist. Die Änderung ist für dieses Ausführungsbeispiel beispielhaft nur für FDD (Frequency Division Duplex) angewendet. Die Änderungen gegenüber dem Stand der Technik sind durch Unterstreichen der zusätzlichen Informationssignale markiert.

Weiterhin wäre es möglich, die noch nicht verwendeten Bits TO eines PICH Rahmens (siehe Figur 3) für ‚Gruppen Service' Zwecke zu verwenden.

Durch die Erweiterung der für das Paging verantwortlichen Informationselemente, soll in vorteilhafter Weise zum einen der Grund für das Paging angezeigt werden, als auch die Gruppe des ‚Gruppen Services', die das Paging betrifft. Dies soll im folgenden am Beispiel des Multicast Services gezeigt werden.

Eine Möglichkeit ist, das Informationselement ‚Paging Record' [3GPP TS 25.331, Kapitel 10.3.3.23] von Figur 9 um ein zusätzliches Element GI ("Multicast Group Identy") zu erweitern, in dem dann die Multicast Gruppe des ‚Multicast Service' identifiziert wird. Zusätzlich verweist der ‚Paging Record' auf das Informationselement ‚Paging Cause' [3GPP TS 25.331, Kapitel 10.3.3.22], dass zweckmäßigerweise um ein zusätzliches Element TMS ("Terminating Multicast Session") erweitert, das den Grund für das Paging angibt, nämlich eine beginnende Multicast Übertragung (siehe Figur 9). Die Änderungen gegenüber dem Stand der Technik sind jeweils durch unterstreichen des jeweiligen zusätzlichen Informationssignals markiert.

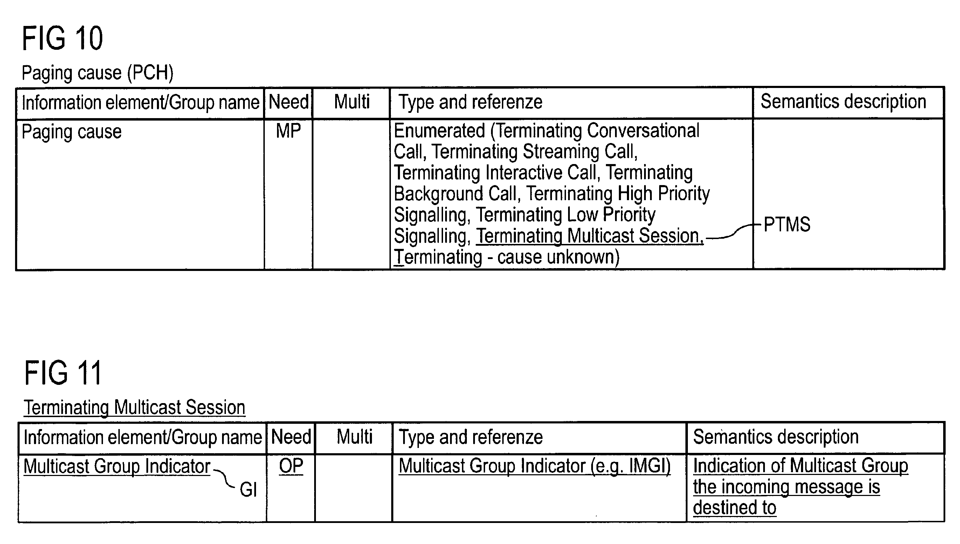

Eine weitere Möglichkeit ist, daß ein UE beim Lesen des Informationselements ‚Paging Cause', das wie zuvor beschrieben erfindungsgemäß ein zusätzliches Element "Terminating Multicast Session" enthält, einen Verweis PTMS entsprechend Figur 10 auf ein weiteres neues Informationselement "Terminating Multicast Session" erhält. In diesem Informationselement steht nun die Multicast Gruppe, für die die ankommende Nachricht bestimmt ist, dargestellt durch einem Multicast Gruppen Indikator GI. Die Änderungen gegenüber dem Stand der Technik sind markiert. Gegenüber der zuerst beschriebenen Möglichkeit, braucht hier das Informationselement ‚Paging Record' nicht verändert zu werden.

Zweckmäßig kann es ggf. auch sein, bereits in den Systeminformationssignalen (siehe Figur 5) des Funkkommunikationssystems, die von mindestens einem dessen Netzwerkelemente abgestrahlt wird, mindestens ein Indikatorsignal wie z.B. GSI darüber zusätzlich mitzuführen, auf welchem der Funkkanäle, insbesondere Secondary Common Control Physical Channels, mindestens ein Transportkanal (PCH) mit Informationen über die jeweilig zu übertragende Gruppennachricht übertragen wird.

Auf folgende Akronyme wird in der Beschreibung Bezug genommen, die hier zusammenfassend aufgelistet sind: (Grundsätzlich erfolgt dabei Mehrzahlbildung durch Anhängen eines 's', z.B.: ein RB, zwei RBs)

| | |
|---|---|
| BMC | Broadcast/Multicast Control |
| DCH | Dedicated Channel |
| DRX | Discontinuous Reception |
| FACH | Forward Access Channel |
| FDD | Frequency Devision Duplex |
| IMSI | International Mobil Subscriber Identitiy |
| IP | Internet Protocol |
| MAC | Medium Access Control |
| MC | Multicast |
| MS | Mobile Station |
| P-CCPCH | Primary Common Control Physical Channel |
| PCH | Paging Channel |
| PDCP | Packet Data Convergence Protocol |
| PI | Paging Indicator |
| PICH | Paging Indicator Channel |
| RB | Radio Bearer |
| RLC | Radio Link Coritrol |
| RRC | Radio Ressource Control |
| S-CCPCH | Secondary Common Control Physical Channel |
| SFN | System Frame Number |
| SRB | Signalling Radio Bearer |
| UE | User Equipment |
| UMTS | Universal Mobile Telecommunication System |
| URA | UMTS Routing Area |

**Patentansprüche**

1.  Verfahren zur Benachrichtigung mindestens einer Gruppe (MC1) von einem oder mehreren Teilnehmergeräten (UE11, UE21, UE31, UE42) eines Funkkommunikationssystems (FCS) über das Vorliegen mindestens einer Gruppennachricht (GN1), die an diese Gruppe (MC1) von mindestens einem Netzwerkelement (BS1, BS2) des Funkkommunikationssystems (FCS) über mindestens einen Funkkanal (PCS) versendet werden soll, wobei das Vorliegen dieser Gruppennachricht (GN1) den Teilnehmergeräten (UE11, UE21, UE31, UE42) der jeweiligen Gruppe (MC1) mit Hilfe eines gemeinsamen, zusätzlichen Gruppen-Paging-Indikatorsignals (GPI1) angezeigt und zur Auswertung bereitgestellt wird.

2.  Verfahren nach Anspruch 1,
    **dadurch gekennzeichnet,**
    **daß** das gemeinsame Gruppen-Paging-Indikatorsignal (PI) über einen ersten separaten, physikalischen Funkkanal (PICH) von mindestens einem Netzwerkelement (BS1) an die Teilnehmergeräte (UE11, UE21, UE31, UE42) der jeweiligen Gruppe (MC1) übertragen wird.

3.  Verfahren nach einem der vorhergehenden Ansprüche,
    **dadurch gekennzeichnet,**
    **daß** über mindestens einen zweiten, separaten Funkkanal (PCH) mindestens ein Informationssignal (GI) zusätzlich darüber übertragen wird, welcher Art die zu übertragende Gruppennachricht (GN1) ist, welcher Paging-Grund für diese Gruppennachricht (GN1) vorliegt und/oder an welche spezifische Empfängergruppe (MC1) von Teilnehmergeräten die jeweilige Gruppennachricht (GN1) addressiert ist.

4.  Verfahren nach einem der Ansprüche 2 und 3,
    **dadurch gekennzeichnet,**
    **daß** der erste separate Funkkanal (PICH) für das Gruppen-Paging-Indikatorsignal (GPI1) dem zweiten separaten Funkkanal (PCH) mit Informationen über die jeweilige Gruppennachricht (GN1) in eindeutiger Weise zugeordnet wird.

**5.** Verfahren nach Anspruch 3 oder 4,
**dadurch gekennzeichnet,**
**daß** der zweite separate Funkkanal (PCH) als Bestandteil eines weiteren Funkkanals, insbesondere Secondary Common Control Physical Channels (S-CCPCH), übertragen wird.

**6.** Verfahren nach einem der vorhergehenden Ansprüche,
**dadurch gekennzeichnet,**
**daß** in den Systeminformationssignalen des Funkkommunikationssystems (FCS), die von mindestens einem dessen Netzwerkelemente (BS1) abgestrahlt wird, mindestens ein Indikatorsignal (GSI) darüber mitgeführt wird, auf welchem der Funkkanäle, insbesondere Secondary Common Control Physical Channels, mindestens ein Transportkanal (PCH) mit Informationen über die jeweilig zu übertragende Gruppennachricht (GN1) übertragen wird.

**7.** Verfahren nach einem der vorhergehenden Ansprüche,
**dadurch gekennzeichnet,**
**daß** als Netzwerkelement zum Aussenden des Gruppen-Paging-Indikatorsignals (GPI1) und/oder der Gruppennachricht (GN1) eine Basisstation (BS1) verwendet wird.

**8.** Verfahren nach einem der vorhergehenden Ansprüche,
**dadurch gekennzeichnet,**
**daß** das Funkkommunikationssystem (FCS) nach dem UMTS (Universal Mobile Telecommunication System)-Standard betrieben wird.

**9.** Verfahren nach einem der vorhergehenden Ansprüche,
**dadurch gekennzeichnet,**
**daß** vorab durch das jeweilige Netzwerkelement (BS1) den Teilnehmergeräten der jeweiligen Gruppe (MC1) durch mindestens ein Informationssignal mitgeteilt wird, auf welchem Funkkanal (PICH) das Gruppen-Paging-Indikatorsignal (GPI1) und/oder auf welchem Funkkanal (PCH) weitere Informationen (GI, Paging Cause) über die zu übertragende Gruppennachricht (GN1) gesendet werden.

**10.** Verfahren nach einem der vorhergehenden Ansprüche,
**dadurch gekennzeichnet,**
**daß** für die Übertragung des Gruppen-Paging-Indikatorsignals (GPI1) und/oder weiterer Informationen (GI, Paging Cause) über die zu übertragende Gruppennachricht (GN1) jeweils ein Funkkanal (PICH, S-CCPCH/PCH) spezifisch vorbelegt wird.

**11.** Verfahren nach einem der vorhergehenden Ansprüche,
**dadurch gekennzeichnet,**
**daß** für die Übertragung des Gruppen-Paging-Indikatorsignals (GPI1) und/oder weiterer Informationen (GI, Paging Cause) über die zu übertragende Gruppennachricht (GN1) jeweils ein spezifischer Funkkanal (PICH, S-CCPCH/PCH) im jeweiligen Teilnehmergerät (UE11) selbst und/oder von mindestens einem Netzwerkelement (BS1) in eindeutiger Weise berechnet wird.

**12.** Verfahren nach einem der vorhergehenden Ansprüche,
**dadurch gekennzeichnet,**
**daß** als Teilnehmergerät ein Mobilfunkgerät, insbesondere Mobilfunktelefon verwendet wird.

**13.** Teilnehmergerät (UE11) eines Funkkommunikationssystems (FCS), das derart ausgebildet ist, daß es nach einem der vorhergehenden Verfahren betreibbar ist.

**14.** Funkkommunikationssystem (FCS) zur Durchführung des Verfahrens nach einem der vorhergehenden Ansprüche.

# FIG 1

# FIG 2

FIG 3

BP     TO

$b_0$    $b_1$                 $b_{287}$   $b_{288}$      $b_{299}$

· · ·     PICH

RF (10ms)

FIG 4

| UE11 | | UT |

SI

| SUE | | SUT |

GPI

| RGPI | | PIC |

PIN

| APIN |

IPIN    SV

GN1

# FIG 5

Secondary CCPCH system information

| Information element | Need | Multi | Type and referenze | Semantics description |
|---|---|---|---|---|
| Secondary CCPCH system information | MP | 1 to <max SCCPCH> | | |
| >Secondary CCPCH info | MP | | Secondary CCPCH info 10.3.6.71 | Note 1 |
| >TFCS | MD | | Transport format combination set 10.3.5.20 | For FACHs and PCH Default value is the value of "TFCS" for the previous SCCPCH in the list (note: the first occurrence is then MP) |
| >FACH/PCH-information | MD | 1 to <max FACHPCH> | | Default value is the value of "FACH/PCH" for the previous SCCPCH in the list (note: the first occurence is then MP) |
| >>Transport channel identity | MP | | Transport channel identity 10.3.5.18 | |
| >>TFS | MP | | Transport format set 10.3.5.23) | For each FACH and PCH Note 2 |
| >>CTCH indicator | MP | | Boolean | The value "TRUE" indicates that a CTCH is mapped on the FACH, and "FALSE" that no CTCH is mapped. |
| >PICH info | OP | | PICH info 10.3.6.49 | PICH info is present only when PCH is multiplexed on Secondary CCPCH |
| >Group Service Indicator ⤸GSI | OP | | Boolean | Group Service Indicator is present only when PCH is multiplexed on S-CCPCH. Indicates which S-CCPCH and associated PICH is used to carry Group Service Information. |

EP 1 283 648 A1

# FIG 6A

PICH Info (system information)

| Information element/Group name | Need | Multi | Type and referenze | Semantics description |
|---|---|---|---|---|
| CHOICE mode | MP | | | |
| >FDD | | | | |
| >>Channelisation code | MP | | Integer (0..255) | SF is fixed and equal to 256 |
| >>Number of PI per frame | MP | | Integer (18, 36, 72, 144) | |
| >>STTD indicator | MP | | STTD Indicator 10.3.6.78 | |
| >>Group PI ⟍ GPI | OP | | Integer (0..Number of PI per frame) | Position of PI destined for Group Services in PICH frame |
| >TDD | | | | |
| >>Channelisation code | MD | | Enumerated ((16/1)...(16/16)) | Default value is the cahnnelisation code used by the SCCPCH carrying the associated PCH. |
| >>Timeslot number | MD | | Timeslot number 10.3.6.84 | Default value is the timeslot used by the SCCPCH carrying the associated PCH. |
| >>CHOICE Burst Type | MP | | | |
| >>>Type 1 | | | | |
| >>>>Midamble Shift | MP | | Integer (0..15) | |
| >>>Type 2 | | | | |
| >>>>Midamble Shift | MP | | Integer (0..5) | |
| >>Repetition period/length | MD | | Enumerated ((4/2), (8/2), (8/4), (16/2), (16/4), (32/2), (32/4), (64/2), (64/4)) | Default value is "(64/2)". |

EP 1 283 648 A1

# FIG 6B

PICH Info (system information)

| Information element/Group name | Need | Multi | Type and referenze | Semantics description |
|---|---|---|---|---|
| >>Offset | MP | | Integer (0...Repetition period-1) | SFN mod Repetitionperiod=Offset. |
| >>Paging indicator length | MD | | Integer (4, 8, 16) | Indicates the length of one paging indicator in Bits. Default value is 4. |
| >>$N_{GAP}$ | MD | | Integer (2, 4, 8) | Number of frames between the last frame carrying PICH for this Paging Occasion and the first frame carrying paging messages for this Paging Occasion. Default value is 4. |
| >>$N_{PCH}$ | MD | | Integer (1..8) | Number of paging groups. Default value is 2. |

EP 1 283 648 A1

# FIG 7

Paging Type 1(PCH)

| Information element/Group name | Need | Multi | Type and referenze | Semantics description |
|---|---|---|---|---|
| Message Type | MP | | Message Type | |
| UE Information elements | | | | |
| Paging record list | OP | | 1 to <max-Page 1> | |
| >Paging record | MP | | Paging record 10.3.3.23 | |
| Other information elements | | | | |
| BCCH modification info | OP | | BCCH modification info 10.3.8.1 | |

# FIG 8

Paging cause (PCH)

| Information element/Group name | Need | Multi | Type and referenze | Semantics description |
|---|---|---|---|---|
| Paging cause | MP | | Enumerated (Terminating Conversational Call, Terminating Streaming Call, Terminating Interactive Call, Terminating Background Call, Terminating High Priority Signalling, Terminating Low Priority Signalling, Terminating Multicast Session, — TMS Terminating - cause unknown | |

EP 1 283 648 A1

# FIG 9

Paging record (PCH)

| Information element/Group name | Need | Multi | Type and referenze | Semantics description |
|---|---|---|---|---|
| CHOICE Used paging identity | MP | | | |
| >CN identity | | | | |
| >>Paging cause | MP | | Paging cause 10.3.3.22 | |
| >>CN domain identity | MP | | CN domain identity 10.3.1.1 | |
| >>CHOICE UE Identity | MP | | | |
| >>>IMSI (GSM-MAP) | | | IMSI (GSM-MAP) 10.3.1.5 | |
| >>>TMSI (GSM-MAP) | | | TMSI (GSM-MAP) 10.3.1.17 | |
| >>>P-TMSI (GMS-MAP) | | | P-TMSI (GSM-MAP) 10.3.1.13 | |
| >>>IMSI (DS-41) | | | TIA/EIA/IS-2000-4 | |
| >>>TMSI (DS-41) | | | TIA/EIA/IS-2000-4 | |
| >UTRAN identity | | | | |
| >>U-RNTI | MP | | U-RNTI 10.3.3.47 | |
| >>CN originated page to connected mode UE | OP | | | |
| >>>Paging cause | MP | | Paging cause 10.3.3.22 | |
| >>>CN domain identity | MP | | CN domain identity 10.3.1.1 | |
| >>>Paging record type identifier | MP | | Paging record type identifier 10.3.1.10 | |
| >>Group identity ⟍GI | OP | | Multicast Group Indicator (e.g. IMGI) | Indication of Multicast Group an incoming message is destined to |

EP 1 283 648 A1

# FIG 10

Paging cause (PCH)

| Information element/Group name | Need | Multi | Type and referenze | Semantics description |
|---|---|---|---|---|
| Paging cause | MP | | Enumerated (Terminating Conversational Call, Terminating Streaming Call, Terminating Interactive Call, Terminating Background Call, Terminating High Priority Signalling, Terminating Low Priority Signalling, <u>Terminating Multicast Session,</u> ⎯PTMS Terminating - cause unknown) | |

# FIG 11

<u>Terminating Multicast Session</u>

| Information element/Group name | Need | Multi | Type and referenze | Semantics description |
|---|---|---|---|---|
| <u>Multicast Group Indicator</u> ⎽ GI | <u>OP</u> | | <u>Multicast Group Indicator (e.g. IMGI)</u> | <u>Indication of Multicast Group the incoming message is destined to</u> |

EP 1 283 648 A1

# EP 1 283 648 A1

**Europäisches Patentamt**

# EUROPÄISCHER RECHERCHENBERICHT

Nummer der Anmeldung

EP 01 11 9060

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 465 391 A (TOEYRYLAE HANNU) 7. November 1995 (1995-11-07) <br><br> * Spalte 3, Zeile 23-54 * | 1,2,6,7, 9,10, 12-14 | H04Q7/38 |
| X | US 5 923 649 A (RAITH ALEX KRISTER) 13. Juli 1999 (1999-07-13) <br> * Spalte 6, Zeile 56-63 * <br> * Spalte 14, Zeile 31-51 * | 1,2,7, 12-14 | |
| X | WO 01 31968 A (ERICSSON INC) 3. Mai 2001 (2001-05-03) <br> * Seite 3, Zeile 12 – Seite 5, Zeile 2 * | 1,2,7, 12-14 | |

| | | | RECHERCHIERTE SACHGEBIETE (Int.Cl.7) |
|---|---|---|---|
| | | | H04Q |

Der vorliegende Recherchenbericht wurde für alle Patentansprüche erstellt

| Recherchenort | Abschlußdatum der Recherche | Prüfer |
|---|---|---|
| DEN HAAG | 27. Februar 2002 | Weinmiller, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 11 9060

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-02-2002

| Im Recherchenbericht angeführtes Patentdokument | Datum der Veröffentlichung | Mitglied(er) der Patentfamilie | Datum der Veröffentlichung |
|---|---|---|---|
| US 5465391    A | 07-11-1995 | FI    88985 B | 15-04-1993 |
|  |  | AT   149777 T | 15-03-1997 |
|  |  | AU   656219 B2 | 27-01-1995 |
|  |  | AU   2448792 A | 05-04-1993 |
|  |  | DE   69217908 D1 | 10-04-1997 |
|  |  | DE   69217908 T2 | 28-08-1997 |
|  |  | EP   0555441 A1 | 18-08-1993 |
|  |  | WO   9305622 A1 | 18-03-1993 |
|  |  | JP   6508735 T | 29-09-1994 |
| US 5923649    A | 13-07-1999 | US   5734645 A | 31-03-1998 |
|  |  | US   5603081 A | 11-02-1997 |
|  |  | AU   681730 B2 | 04-09-1997 |
|  |  | AU   1048095 A | 23-05-1995 |
|  |  | BR   9405927 A | 05-12-1995 |
|  |  | CA   2152946 A1 | 11-05-1995 |
|  |  | CN   1116888 A | 14-02-1996 |
|  |  | EP   0677222 A1 | 18-10-1995 |
|  |  | FI   953264 A | 30-06-1995 |
|  |  | JP   8508627 T | 10-09-1996 |
|  |  | NZ   276272 A | 27-04-1998 |
|  |  | NZ   329740 A | 28-05-1999 |
|  |  | NZ   329741 A | 28-05-1999 |
|  |  | WO   9512934 A1 | 11-05-1995 |
|  |  | US   5655215 A | 05-08-1997 |
|  |  | US   6175557 B1 | 16-01-2001 |
|  |  | AU   680071 B2 | 17-07-1997 |
|  |  | AU   1048395 A | 23-05-1995 |
|  |  | AU   691850 B2 | 28-05-1998 |
|  |  | AU   1087495 A | 23-05-1995 |
|  |  | AU   685885 B2 | 29-01-1998 |
|  |  | AU   1087695 A | 23-05-1995 |
|  |  | AU   695892 B2 | 27-08-1998 |
|  |  | AU   2079997 A | 24-07-1997 |
|  |  | AU   720332 B2 | 25-05-2000 |
|  |  | AU   2358897 A | 14-08-1997 |
|  |  | AU   690924 B2 | 07-05-1998 |
|  |  | AU   7757094 A | 18-05-1995 |
|  |  | AU   7865898 A | 15-10-1998 |
|  |  | AU   7865998 A | 01-10-1998 |
|  |  | AU   697210 B2 | 01-10-1998 |
|  |  | AU   8131394 A | 23-05-1995 |
|  |  | AU   681721 B2 | 04-09-1997 |
|  |  | AU   8131494 A | 23-05-1995 |
|  |  | BR   9404316 A | 04-07-1995 |
|  |  | BR   9405702 A | 28-11-1995 |

Für nähere Einzelheiten zu diesem Anhang : siehe Amtsblatt des Europäischen Patentamts, Nr. 12/82

**ANHANG ZUM EUROPÄISCHEN RECHERCHENBERICHT**
**ÜBER DIE EUROPÄISCHE PATENTANMELDUNG NR.**                    EP 01 11 9060

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-02-2002

| Im Recherchenbericht angeführtes Patentdokument | Datum der Veröffentlichung | Mitglied(er) der Patentfamilie | Datum der Veröffentlichung |
|---|---|---|---|
| US 5923649 A | | BR 9405703 A | 28-11-1995 |
| | | BR 9405704 A | 28-11-1995 |
| | | BR 9405705 A | 28-11-1995 |
| | | BR 9405743 A | 05-12-1995 |
| | | CA 2134695 A1 | 02-05-1995 |
| | | CA 2152942 A1 | 11-05-1995 |
| | | CA 2152943 A1 | 11-05-1995 |
| | | CA 2152944 A1 | 11-05-1995 |
| | | CA 2152945 A1 | 11-05-1995 |
| | | CA 2152947 A1 | 11-05-1995 |
| | | CN 1112345 A ,B | 22-11-1995 |
| | | CN 1117329 A ,B | 21-02-1996 |
| | | CN 1117330 A ,B | 21-02-1996 |
| | | CN 1117331 A ,B | 21-02-1996 |
| WO 0131968 A | 03-05-2001 | AU 1230401 A | 08-05-2001 |
| | | WO 0131968 A1 | 03-05-2001 |

EPO FORM P0461

Für nähere Einzelheiten zu diesem Anhang : siehe Amtsblatt des Europäischen Patentamts, Nr.12/82